(19) Europäisches Patentamt
European Patent Office
Office européen des brevets

(11) **EP 2 664 890 B1**

(12) **EUROPEAN PATENT SPECIFICATION**

(45) Date of publication and mention
of the grant of the patent:
**30.10.2019 Bulletin 2019/44**

(51) Int Cl.:
***G01B 11/26*** *(2006.01)*     ***G01B 11/02*** *(2006.01)*
***G01B 17/00*** *(2006.01)*

(21) Application number: **12305554.3**

(22) Date of filing: **18.05.2012**

(54) **Method and device for measuring the angular position of an emitting or reflecting object with hyperacuity**

Verfahren und Vorrichtung zum Messen der Winkellage eines emittierenden oder reflektierenden Objekts mit hoher Schärfe

Procédé et dispositif pour mesurer la position angulaire d'un objet émettant ou réfléchissant avec hyper-acuité

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.11.2013 Bulletin 2013/47**

(73) Proprietors:
• **Université d'Aix-Marseille**
**13007 Marseille (FR)**
• **Centre National de la Recherche Scientifique (C.N.R.S.)**
**75016 Paris (FR)**

(72) Inventors:
• **Viollet, Stéphane**
**13006 Marseille (FR)**
• **Kerhuel, Lubin**
**78170 La Celle Saint Cloud (FR)**

(74) Representative: **Lavoix**
**2, place d'Estienne d'Orves**
**75441 Paris Cedex 09 (FR)**

(56) References cited:
**EP-A1- 2 341 312**    **US-A- 5 216 486**
**US-A- 6 031 612**

**Description**

The present invention relates to a method for measuring the relative angular position of an object and an angular position measuring device comprising at least a first and a second transducers delimiting respectively a first and a second reception fields, the first and second reception fields overlapping in an area defined as the field of view of the device, the method comprising the following steps:

a) carrying out an amplitude modulation of the signals delivered by the first and the second transducers ; and
b) calculating an output signal starting from the amplitude modulated signals delivered by the first and the second transducers as a function of said relative angular position.

The present invention also relates to a device for measuring the relative angular position of an object and said device, the device comprising:

- at least a first and a second transducers delimiting respectively a first and a second reception fields, the first and second reception fields overlapping in an area defined as the field of view of the device ; and
- a detection circuit comprising a means for calculating an output signal starting from the signals delivered by the first and the second transducers as a function of said relative angular position.

Such a method and device are known from EP 2 341 312 A1. In this known device and method, the amplitude modulation of the signals delivered by the transducers is achieved by mechanical vibration of the transducers. Accordingly, this known solution requires a mechanical actuator for vibrating the transducers.
However, this mechanical actuator needs to be carefully designed. Furthermore, it is subject to stresses and wear leading to malfunctions or even break-down.
Document US 5,216,486 relates to an apparatus for detecting irregularities in the diameter of a filament.
Document US 6,031,612 pertains to an apparatus and methods for contour measurement using movable sources.
An object of the present invention is to make the method and device of EP 2 341 312 A1 more reliable, cheaper, simpler and capable to detect a punctual object or a bar type object.
According to the invention, this object is achieved with a method having the features defined in claim 1.
Likewise, a device according to the invention has the features defined in claim 11.
Hence, in the present invention, the mechanical vibration is replaced by intensity-modulated radiation. Such radiation is generated more easily than a mechanical vibration and there are no mechanical parts that might malfunction. Due to the absence of a mechanical actuator, the inventive method and device are also cheaper.
In the following, examples termed as "embodiments" are not necessarily encompassed by the scope of the invention, which is defined by the claims.
According to preferred embodiments, the method has one or several of the following features, taken in isolation or in all technically possible combinations:

- the method comprises the step of illuminating said object with a radiation such that said reception of said radiation occurs by reflection from said object into said field of view.
- the method comprises the step of illuminating the object with a plurality of radiations having the same wavelength and synchronised such that said reception of said radiation occurs by reflection from said object of the into said field of view.
- said object is a radiation source emitting said radiation.
- said object comprises a plurality of radiation sources emitting said radiation.- the output signal is the difference-to-sum ratio of the amplitudes of the temporally filtered signals delivered by the first and the second transducers.
- the output signal is proportional to the difference between the logarithm of the absolute value of the temporally filtered signal delivered by the first transducer and the logarithm of the absolute value of the temporally filtered signal delivered by the second transducer.
- the method comprises a step of demodulation of the signals delivered by the first and the second transducer before the step of calculating the output signal, the output signal being calculated starting from the demodulated signals.
- the demodulation is an asynchronous demodulation, a synchronous demodulation or an envelope detection of the signals delivered by the first and the second transducers.
- the demodulation involves a step of filtering the signals delivered by the first and the second transducer, said filtering being a selective filtering centered on said known modulation frequency.
- the demodulation involves a step of filtering the signals delivered by the first and the second transducer, said filtering being a derivative filtering.

- the demodulation involves a step of filtering the signals delivered by the first and the second transducer, said filtering being a combination of both a selective filtering centered on said known modulation frequency and a derivative filtering.
- said transducers are optical sensors, such as photoelectric sensors, and said radiation is optical radiation, such as infrared radiation.
- each transducer has an angular sensitivity function with a spatial shape that can be approximated by a spatial Gaussian shape characterized by a variance, the shape being characterized by an angle at half-width proportional to the square root of the variance of the Gaussian shape.

The invention is directed to a method for measuring the relative angular position of each of a plurality of objects and an angular position measuring device comprising at least a first and a second transducers delimiting respectively a first and a second reception fields, the first and second reception fields overlapping in an area defined as the field of view of the device, wherein the method as previously described is carried out for each of said objects, each object being associated with a specific radiation having its own unique modulation frequency.

According to preferred embodiments, in such method for measuring, each transducer has an angular sensitivity function with a spatial shape that can be approximated by a spatial Gaussian shape characterized by a variance, the shape being characterized by an angle at half-width proportional to the square root of the variance of the Gaussian shape.

According to preferred embodiments, the device has one or several of the following features, taken in isolation or in all technically possible combinations:

- a lens having a lens center, the first and second transducers being placed substantially in the image focal plane of the lens and the average directions of observation of the first and second transducers corresponding substantially to two lines linking the centers of the first and second transducer and the lens center of the lens.
- the detection circuit comprises a demodulator for demodulating the signals delivered by the first and the second transducers.
- said transducers are optical sensors, such as photoelectric sensors, and said radiation source is an optical radiation source, such as an infrared source.
- each transducer has an angular sensitivity function with a spatial shape that can be approximated by a spatial Gaussian shape characterized by a variance, the shape being characterized by an angle at half-width proportional to the square root of the variance of the Gaussian shape.The invention is also directed to a set of devices comprising at least one lens, at least three transducers and a plurality of detection circuits, each pair of two consecutive transducers being placed close to the focal plane of one of the at least one lens and connected to one of the plurality of detection circuits, wherein at least one device as previously described includes one of the at least one lens, and wherein each lens of the at least one lens and each transducer are arranged substantially on a spherical, cylindrical or curved surface surrounding at least one local common centre, the at least one local common centre constituting the centre of field of view which is the sum over all fields of view of each of the devices taken together.

The invention will be better understood when reading the following description of non limiting examples of the invention, with reference to the accompanying figures, wherein:

Figure 1 is a schematic representation of a first embodiment of a non-claimed angular position measuring device;
Figure 2 is a schematic representation of a second embodiment of the inventive angular position measuring device;
Figure 3 is a schematic representation of a third embodiment of a non-claimed angular position measuring device;
Figure 4 is a schematic representation of a fourth embodiment of a non-claimed angular position measuring device;
Figure 5 is a schematic representation of a fifth embodiment of an angular position measuring device for use in a method according to the invention; and
Figure 6 is a graph showing the detector's output signal in response to the movement of a finger in the first embodiment.

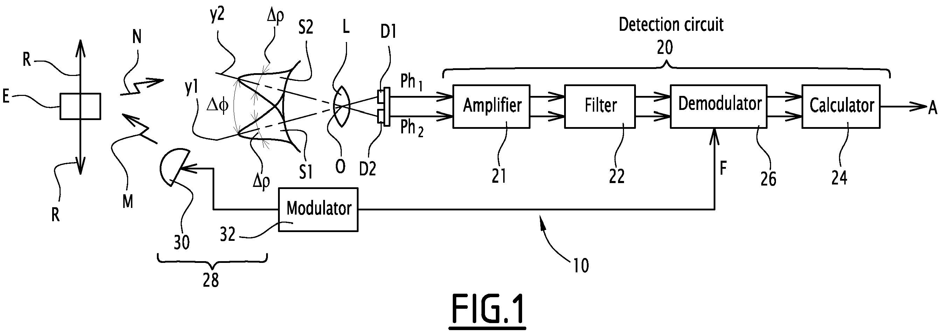

With reference to figure 1, there is shown a first embodiment 10 of an angular position measuring device. The angular position measuring device 10 is adapted to measure, as a function of time and in 1 dimension, the angular position $\Psi$ of a moving object E with respect to said angular position measuring device 10. The movement of the object E is illustrated by the arrows R.

The device 10 for measuring the angular position comprises a first transducer a second transducer, namely optical sensors $D_1$ and $D_2$ whose optical axes $Y_1$, $Y_2$ are separated by an inter-receptor angle $\Delta\varphi$. Such angle is non zero. In other words, it can be defined for each detector D1, D2 a reception field, respectively the first and the second one. Such reception fields overlap. The overlapping area is defined as the field of view FOV of the device 10.

Preferably, the first and the second optical sensors $D_1$ and $D_2$ are each formed by a photoelectric receiver such as a photoelectric diode, whose spectral sensitivity can be selected in the spectral range of visible or ultraviolet light or, alternatively, in the range of near or far infrared radiation - for example for nocturnal or all-weather conditions.

The wavelength of maximum sensitivity of the aforementioned photodiodes can thus be chosen in dependence of the specific application of the angular position measuring device 10.

Preferably, the angular position measuring device 10 also comprises a convex lens L, which determines said inter-receptor angle $\Delta\varphi$. The optical sensors $D_1$ and $D_2$ are placed substantially in the focal plane of the lens L. The optical center O of the lens L is located between the optical sensors $D_1$, $D_2$ and the object E. The optical axes $Y_1$, $Y_2$ of the first and second optical sensors $D_1$, $D_2$ correspond substantially to the lines linking the centers of the first and second optical sensors, respectively, and the optical center O of the lens L.

The lens L placed in front of the two optical sensors confers them a given angular sensitivity. The corresponding angular sensitivity function S is a Bell-shaped (Gaussian-like) function, as shown in the figures. The Gaussian-like angular sensitivity function S is obtained by slightly defocusing the system consisting of the lens L and the optical sensors, whereby the two optical sensors $D_1$ and $D_2$ are placed close to the focal plane, between the lens L and its focal plane. The angular sensitivity functions $S_1$, $S_2$ of the two optical sensors $D_1$ and $D_2$ are partially overlapping (cf. the figures). The optical axes $Y_1$ and $Y_2$ correspond to the maximum sensitivity of each of the optical sensors $D_1$ and $D_2$, respectively.

The position of the object E is defined by two angles $\psi$ and $\theta$. In this case, the two-dimension angular sensitivity function $s(\psi, \theta)$ of the first and second optical sensors $D_1$ and $D_2$ can be written as follows:

$$s(\psi,\theta) = \frac{1}{\sigma\sqrt{2\pi}} e^{-\frac{\psi^2+\theta^2}{2\sigma^2}}$$

The parameter $\sigma$ is defined by the full width at half maximum (FWHM) $\Delta\rho$ of the angular sensitivity function (cf. the figures) and results directly from the variance $\sigma^2$ of the Gaussian curve by the following formula:

$$\frac{\Delta\rho}{2\sqrt{2\ln 2}} = \sigma$$

According to this formula, the full width at half maximum is the square root of the variance $\sigma^2$.

It is to be noted that the just described Gaussian-like angular sensitivity is merely exemplary. The optical sensors' angular sensitivity can also take a different form, such as a cosine form. Moreover, in one embodiment, the detector 10 can only comprise two optical sensors $D_1$ and $D_2$ without the lens L. In this embodiment, the Gaussian-like angular sensitivity function is being provided by the own angular sensitivity function of the optical sensors.

Typical optical characteristics of the device 10 are: $\Delta\rho$ = 3° and $\Delta\varphi$ = 2.87°, which gives a ratio $\Delta\rho$: $\Delta\varphi$ of 1.04.

Moreover, the device for measuring the angular position 10 comprises a detection circuit 20 in order to determine the angular position $\Psi$ of the object E, on the basis of the signals $Ph_1$ and $Ph_2$ delivered by the first and the second optical sensors $D_1$ and $D_2$, respectively. The detection circuit 20 is connected to the first and second optical sensors D1 and D2 and receives the signals $Ph_1(t)$ and $Ph_2(t)$ delivered by the first and second optical sensors $D_1$ and $D_2$, respectively.

The detection circuit 20 preferably includes a pair of amplifiers 21 for amplifying the signals $Ph_1(t)$ and $Ph_2(t)$ delivered by the first and second optical sensors $D_1$ and $D_2$. The amplifiers 21 may be linear amplifiers or non-linear amplifiers, such as logarithmic amplifiers.

The detection circuit 20 also comprises a pair of band-pass filters 22 (preferably analog circuits) in order to calculate the differentiated signals of the first and second optical sensors, D1 and D2 respectively.

Moreover, the detection circuit 20 comprises a calculator 24 for calculating an output signal A and the angular position $\Psi$ of the object E depending on the output signal A.

Furthermore, the detection circuit 20 comprises advantageously a pair of demodulators 26 connected between the band-pass filters 22 and the calculator 24, in order to demodulate the signals delivered by the first and the second optical sensors $D_1$, $D_2$ before calculating the output signal A and the angular position $\Psi$. The demodulation of these two signals enables to extract the information of amplitude of these two signals from noise. The amplitude of the differentiated signals is determined using the pair of demodulators 26. The demodulated signals are then used for the calculation of the output signal A.

For further details on the detection circuit 20 and its components, reference is made to EP 2 341 312 A1.

Additionally, the angular position measuring device 10 includes a radiation generator 28. The radiation generator 28 comprises a radiation source 30 and preferably also a radiation intensity modulator 32. The radiation intensity modulator 32 is connected to the demodulators 26 of the detection circuit 20. The radiation source 30 may be an electroluminescent device, such as a light emitting diode (LED). In this case, the radiation intensity modulator 32 is adapted to vary the supply voltage of the LED 30 as a function of time. Alternatively, the radiation source 30 may also be a laser. Preferably, the radiation source 30 is an infrared source.

A description of the method for measuring the angular position $\Psi$ of the object E using the angular position measuring device 10 of figure 1 will now be given.

The modulator 32 controls the radiation source 30 such that the latter emits radiation M towards the moving object E whose intensity is modulated in time at a given frequency F. One may therefore qualify the radiation source 30 as a scintillating radiation source. Preferably, the frequency F is constant in time. The intensity modulation may for example be sinusoidal. Frequency F is outputted by the modulator 32 to the demodulators 26.

The radiation M is reflected by the object E as radiation N, which is received by the optical sensors $D_1$ and $D_2$ within the field of view.

The ensuing signals delivered to the detection circuit 20 by the first and second optical sensors $D_1$ and $D_2$ as a function of time t are denoted by $Ph_1(t)$ and $Ph_2(t)$ and, in the case of an angular position measurement in 1 dimension (1d), can be written as follows:

$$Ph_1(t) = Lum(t) * s_1^{1d}(\Psi, \theta)$$

$$= Lum(t) * \frac{1}{\sigma\sqrt{2\pi}} e^{-\frac{\left(\Psi - \frac{\Delta\varphi}{2}\right)^2 + \theta^2}{2\sigma^2}}$$

$$Ph_2(t) = Lum(t) * s_2^{1d}(\Psi, \theta)$$

$$= Lum(t) * \frac{1}{\sigma\sqrt{2\pi}} e^{-\frac{\left(\Psi + \frac{\Delta\varphi}{2}\right)^2 + \theta^2}{2\sigma^2}}$$

The function Lum(t) represents the luminance of the object E, which varies according to the intensity modulation applied to the radiation emitted by the radiation source 30.

The signals $Ph_1(t)$ and $Ph_2(t)$ entering the detection circuit 20 are first amplified by the amplifiers 21.

Each of the signals from the optical sensors $D_1$ and $D_2$ is then filtered in order to extract their dynamical part by the pair of band-pass filters 22.

Part of the band-pass filters 22 essentially acts as a temporal differentiator of the signals delivered by the first and second optical sensors $D_1$ and $D_2$. The band-pass filters 22 also cancel the DC component and the high frequency noise, while acting as anti-aliasing filters for the subsequent digital processing.

Then, the pair of demodulators 26 isolates the envelope of the differentiated signals.

The output signal A is calculated by the calculator 24 using the demodulated signals. The desired output signal A should depend only on the angular position $\psi$ of the object E within the field of view FOV.

According to the invention, the calculator 24 may calculate the output signal A in two different ways:

In the first way, the output signal A is the result of the difference-to-sum ratio of the amplitudes of the temporally differentiated signals:

$$A = \left(\frac{Ph_1(t) - Ph_2(t)}{Ph_1(t) + Ph_2(t)}\right) = \tanh\left(\psi * \frac{4\ln(2)\Delta\varphi}{\Delta\rho^2}\right)$$

Here, use has been made of the known mathematical equation:

$$\tanh\left(\frac{1}{2}\ln\left(\frac{x}{y}\right)\right) = \frac{x - y}{x + y}$$

where x and y have been replaced respectively by $Ph_1(t)$ and $Ph_2(t)$.

The calculation of such ratio allows for the reduction of the common mode noise originating, e.g., from ambient artificial light (100 Hz and higher harmonics, if the frequency of the mains is 50 Hz).

As one can see, when this calculation way is used, the output signal A gives a measure of the angular position $\psi$ of the object E since the output signal A is essentially the hyperbolic tangent of the angular position $\psi$. The advantage of this calculation method is a very good linearity over a large measurement range.

Alternatively, the output signal A may be calculated on the basis of the difference between the logarithm of the absolute value of the temporally filtered signal $Ph_1(t)$ delivered by the first optical sensor D1 and the logarithm of the absolute value of the temporally filtered signal $Ph_2(t)$ delivered by the second optical sensor D2. The corresponding equation is as follows:

$$A = \frac{\Delta\rho^2}{8\ln(2)\Delta\varphi}\left(\ln|Ph_1(t)| - \ln|Ph_2(t)|\right) = \psi$$

In this case, the output signal A is directly equal to the angular position $\psi$ of the object E.

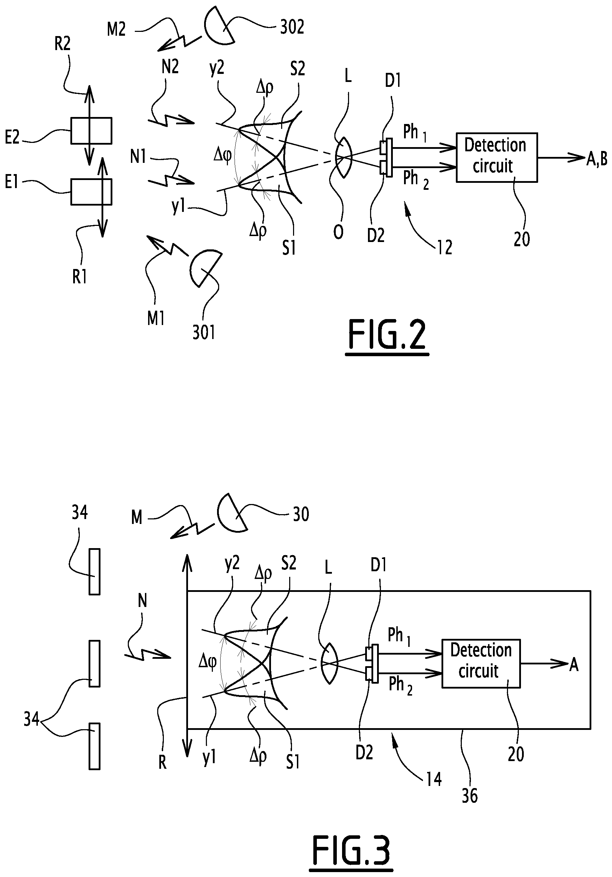

Alternative embodiments will now be described with reference to figures 2 to 5. Regarding elements of these alternative embodiments that are identical or similar to those of the first embodiment of figure 1, reference is made to the description above. In the following, only the differences of the alternative embodiments with respect to the first embodiment will be detailed.

Referring now to figure 2, there is shown a second embodiment of an inventive angular position measuring device 12. In contrast to the device 10 according to the first embodiment, this angular position measuring device 12 is able to measure the angular position of two different moving objects E1 and E2, object E1 moving according to arrows R1, and object E2 moving according to arrows R2. To achieve this, the angular position measuring device 12 is equipped with two radiation sources 301, 302.

Radiation source 301 emits radiation M1 which is intensity modulated at a first frequency F1. The radiation M1 is reflected by object E1 as radiation N1 into the field of view FOV of the optical sensors D1, D2.

Radiation source 302 emits radiation M2 which is intensity modulated at a second frequency F2, different from the first frequency F1. The radiation M2 is reflected by object E2 as radiation N2 into the field of view FOV of the optical sensors D1, D2.

With the frequencies F1 and F2 as an input, and using the principles already described for the first embodiment, the detection circuit 20 is able to deliver two output signals A and B, which represent the angular position of the first and second moving object E1, E2, respectively.

Referring now to figure 3, there is shown a third embodiment of an angular position measuring device 14. The angular position measuring device 14 comprises a moving sensor assembly 36. The sensor assembly 36 includes a lens L, optical sensors D1, D2 and a detection circuit 20. The translational and/or rotational movement of sensor assembly 36 is illustrated by arrows R. In contrast to sensor assembly 36, the radiation source 30 of angular position measuring device 14 is stationary. Radiation source 30 emits radiation M, which is intensity modulated at a frequency F.

Stationary reflectors 34 are provided, which reflect the radiation M as radiation N into the field of view FOV of the optical sensors D1, D2.

With the frequency F as an input, and using the principles already described for the first embodiment, the detection circuit 20 is able to deliver an output signal A, which represents the angular position of the sensor assembly 36 with respect to the stationary reflectors 34.

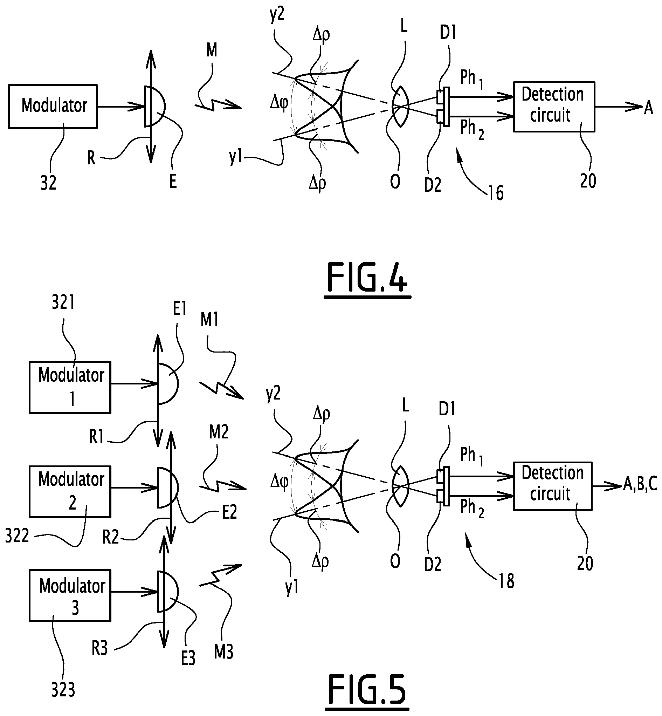

Referring now to figure 4, there is shown a fourth embodiment of an angular position measuring device 16. Here, the angular position measuring device 16 lacks a radiation source. Indeed, in this implementation there is no need for providing the angular position measuring device with a radiation source since the moving object E is itself the radiation source. The moving object E whose angular position is to be determined emits radiation M that is intensity modulated by a modulator 32 at a known frequency F. Radiation M enters the field of view FOV of the optical sensors D1, D2. Using the known frequency F, the detection circuit 20 then delivers an output signal A, which is representative of the angular position of the moving radiation source E.

Referring now to figure 5, there is shown a fifth embodiment of an angular position measuring device 18. This embodiment is similar to the fourth embodiment of figure 4, with the difference that the angular position measuring device 18 is able to determine the angular position of three moving radiation sources E1 to E3. Moving radiation sources E1 to E3 emit radiation M1 to M3, respectively, into the field of view of the optical sensors D1, D2. Each radiation M1 to M3 is intensity modulated by a corresponding modulator 321, 322 and 323 at a corresponding frequency F1, F2 and F3. The frequencies F1 to F3 are all different from each other. Using the known frequencies F1 to F3, the detection circuit 20 delivers three output signals A, B, C, which represent the angular position of the first, second and third moving radiation source E1, E2 and E3, respectively. The radiations M1 to M3 are at the same wavelength and synchronized. In this context, two radiations are synchronized if there is a temporal relation between the two radiations.

According to a further embodiment, which is absent from the figures, several devices for measuring the angular position can be arranged in a set of devices, in order to increase the total field of view of the detection device until it is rendered panoramic. The set of devices comprises at least one lens, a plurality of N optical sensors (N being an integer and N ≥ 2) placed substantially in the focal plane of the lens and (N-1) detection circuits as described before. Each pair of consecutive optical sensors is connected to a detection circuit to calculate a plurality of output signals $A_{(N)}(t)$. The output signal delivered by each detection circuit can thus be sampled for subsequent digital processing. The method as described before is applied to each pair of optical sensors to measure the angular position of an object E.

The plurality of optical sensors can be placed substantially in the focal plane of a single lens, the so-called "camera eye" configuration. Alternatively, one or several pairs of consecutive optical sensors can be placed in the focal plane of one of several lenses. Such a set of devices comprises a plurality of adjacent devices, each consisting of a lens and a plurality of optical sensors with different optical axes, the so-called "compound eye" configuration.

In the compound eye configuration, the devices are arranged substantially on a spherical or cylindrical surface surrounding a common centre. This common centre constitutes, for the set of devices, the optical centre of an inter-receptor angle $\Delta\varphi$ which is the sum over all inter-receptor angles $\Delta\varphi_i$ of each of the devices taken together. This determines a total filed of view FOVt which corresponds to the sum over all fields of view FOVi of each of the devices taken together.

Furthermore, this set of devices can be generalized for detecting a target in two-dimension. In the following example of such a two-dimensional detection, the number of optical sensors is limited to three, $D_1$, $D_2$ and $D_3$, in order to facilitate the description. In one embodiment, the two pairs of optical sensors, $D_1$-$D_2$ and $D_2$-$D_3$, are arranged in two directions substantially orthogonal H and V. Each pair of optical sensors is placed substantially in the focal plane of its own lens or all the optical sensors are placed in the focal plane of a single lens. Each lens and each optical sensor are arranged substantially on a spherical or cylindrical surface surrounding at least one common centre. A first centre constitutes the optical centre of an inter-receptor angle $\Delta\varphi_H$, in the first direction, and a second centre, which can be identical to the first one, constitutes the optical centre of an inter-receptor angle $\Delta\varphi_V$, in the second direction, substantially orthogonal to the first direction.

In the same manner as before, each pair of optical sensors is connected to a detection circuit to calculate two output signals $A_{(H)}(t)$ and $A_{(V)}(t)$, each output signal depending on the angular position $\Psi$, $\theta$ of the target along directions H and V, respectively.

In another embodiment, the two pairs of optical sensors, $D_1$-$D_2$ and $D_2$-$D_3$ are arranged such that $D_1D_2D_3$ form a triangle.

Finally, in a non-limiting embodiment, the plurality of optical sensors is arranged according to a matrix of optical sensors, each optical sensor constituting a pixel $D_{ij}$. The rectangular matrix of optical sensors made up in this way forms a two-dimensional retina.

In the preceding description, the invention has been described in the context of electromagnetic and in particular optical radiation. However, the invention may also be carried out using other types of radiation, such as acoustic radiation. In this case, the transducers D1, D2 would take the form of microphones and the radiation source 30 would be a loudspeaker.

Example

The example illustrated corresponds to the first embodiment. The movement of the object is a pseudo-periodic translation. More precisely, a finger placed within the field of view of the detectors D1 and D2 is moved in a back and forth movement (noted R in figure 1)

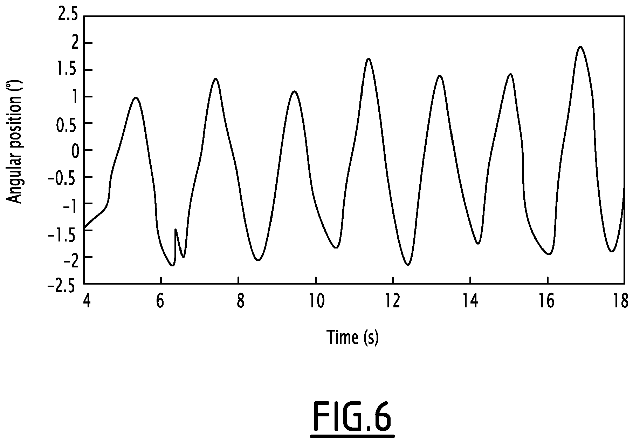

Figure 6 shows the detector's output signal in response to the movement of the finger. In this example, the radiation source was an infrared LED oriented toward the finger and modulated by a sinus at a frequency of 40Hz.

In each embodiment, it is thus proposed a method and contactless device for measuring the angular position of an object with an acuity much better than the one imposed by the inter-receptor angle $\Delta\varphi$.

**Claims**

1. Method for measuring the relative angular position of each of a plurality of objects (E1, E2) and an angular position measuring device (12) comprising at least a first and a second transducers (D1, D2) delimiting respectively a first and a second reception fields, the first and second reception fields overlapping in an area defined as the field of view (FOV) of the device (12),
   the method comprising the following steps, for each (E1, E2) of the plurality of objects :

   a) carrying out an amplitude modulation of the signals (Ph1, Ph2) delivered by the first and the second transducers (D1, D2); and
   b) calculating an output signal (A, B) starting from the amplitude modulated signals (Ph1, Ph2) delivered by the first and the second transducers (D1, D2),

step a) being done by receiving radiation (N1, N2), whose intensity is modulated in time at a known frequency (F1, F2), from said object (E1, E2) with said transducers (D1, D2) within the field of view (FOV), the output signal being representative of the angular position of the object (E) and being calculated using the known frequency (F1, F2), each object (E1, E2) being associated with a specific radiation (N1, N2) having its own unique modulation frequency (F1, F2).

2. Method according to claim 1, further comprising the step of illuminating each of said objects (E1, E2) with a radiation (M) such that said reception of said radiation (N) occurs by reflection from said object (E) into said field of view (FOV) for each of said objects (E1, E2).

3. Method according to claim 1, further comprising the step of illuminating said objects (E1, E2) with a plurality of radiations (M1, M2, M3) having the same wavelength and synchronised such that said reception of said radiation (N) occurs by reflection from said object (E) into said field of view (FOV) for each of said objects (E1, E2).

4. Method according to claim 1, wherein each object (E1, E2) is a radiation source emitting the respective specific radiation (N1, N2).

5. Method according to any one of claims 1 to 4, wherein the output signal (A) is the difference-to-sum ratio of the amplitudes of the temporally filtered signals delivered by the first and the second transducers (D1, D2).

6. Method according to any one of claims 1 to 4, wherein the output signal (A) is proportional to the difference between the logarithm of the absolute value of the temporally filtered signal delivered by the first transducer (D1) and the logarithm of the absolute value of the temporally filtered signal delivered by the second transducer (D2).

7. Method according to any one of claims 1 to 6, further comprising a step of demodulation of the signals (Ph1, Ph2) delivered by the first and the second transducer (D1, D2) before the step of calculating the output signal (A), the output signal (A) being calculated starting from the demodulated signals.

8. Method according to claim 7, wherein the demodulation is an asynchronous demodulation, a synchronous demodulation or an envelope detection of the signals (Ph1, Ph2) delivered by the first and the second transducers (D1, D2).

9. Method according to claim 7 or 8, wherein the demodulation involves a step of filtering the signals (Ph1, Ph2) delivered by the first and the second transducer (D1, D2), said filtering being a selective filtering centered on said known modulation frequency (F), a derivative filtering, or a combination of both a selective filtering on said known modulation frequency (F) and a derivative filtering.

10. Method according to any one of claims 1 to 9, wherein said transducers (D1, D2) are optical sensors, such as photoelectric sensors, and said radiation (M) is optical radiation, such as infrared radiation.

11. Device (12) for measuring the relative angular position of each of a plurality of objects (E1, E2) and said device, the device comprising:

- at least a first and a second transducers (D1, D2) delimiting respectively a first and a second reception fields, the first and second reception fields overlapping in an area defined as the field of view (FOV) of the device (10);
- a plurality of radiation sources (301, 302), each of said radiation sources being adapted to emit radiation (M1, M2), whose intensity is modulated in time at a known frequency (F1, F2), towards one of said objects, such that said radiation is reflected from said object into said field of view, each radiation (M1, M2) having its own unique modulation frequency (F1, F2); and
- a detection circuit (20) comprising a means (24) for calculating, for each of said objects, an output signal (A, B) starting from the signals (Ph1, Ph2) delivered by the first and the second transducers (D1, D2), the output signal being representative of the angular position of the respective object (E) and being calculated using the respective known unique frequency (F1, F2).

12. Device according to claim 11, wherein said transducers (D1, D2) are optical sensors, such as photoelectric sensors, and each of said radiation sources (301, 302) is an optical radiation source, such as an infrared source.

13. Device according to claim 11 or 12, further comprising a lens (L) having a lens center (O), the first and second transducers (D1, D2) being placed substantially in the image focal plane of the lens (L) and the average directions of observation of the first and second transducers (D1, D2) corresponding substantially to two lines linking the centers of the first and second transducer and the lens center (O) of the lens (L).

14. Device according to any one of claims 11 to 13, wherein the detection circuit (20) comprises a demodulator (26) for demodulating the signals (Ph1, Ph2) delivered by the first and the second transducers (D1, D2).

15. Method according to any one of claims 1 to 10 or device according to any one of claims 11 to 14, wherein each transducer (D1, D2) has an angular sensitivity function with a spatial shape that can be approximated by a spatial Gaussian shape **characterized by** a variance ($\sigma^2$), the shape being **characterized by** an angle at half-width ($\Delta\rho$) proportional to the square root of the variance ($\sigma^2$) of the Gaussian shape.

16. Set of devices comprising at least one lens, at least three transducers and a plurality of detection circuits, each pair of two consecutive transducers being placed close to the focal plane of one of the at least one lens and connected to one of the plurality of detection circuits, wherein at least one of the devices is a device according to any one of claims 11 to 14 and includes one of the at least one lens, and wherein each lens of the at least one lens and each transducer are arranged substantially on a spherical, cylindrical or curved surface surrounding at least one local common centre, the at least one local common centre constituting the centre of field of view (FOVt) which is the sum over all fields of view (FOVi) of each of the devices taken together.

**Patentansprüche**

1. Verfahren zum Messen der relativen Winkellage jedes Objektes einer Mehrzahl von Objekten (E1, E2) und einer Winkellage-Messvorrichtung (12), die mindestens einen ersten und einen zweiten Sensor (D1, D2) umfasst, die jeweils ein erstes und ein zweites Empfangsfeld begrenzen, wobei das erste und das zweite Empfangsfeld in einem Bereich überlappen, der als das Gesichtsfeld (FOV) der Vorrichtung (12) definiert ist,

   wobei das Verfahren die folgenden Schritte für jedes Objekt (E1, E2) der Mehrzahl von Objekten umfasst:

   a) Ausführen einer Amplitudenmodulation der von dem ersten und zweiten Sensor (D1, D2) gelieferten Signale (Ph1, Ph2); und
   b) Berechnen eines Ausgangssignals (A, B), ausgehend von den amplitudenmodulierten Signalen (Ph1, Ph2), die von dem ersten und zweiten Sensor (D1, D2) geliefert werden,

   wobei Schritt a) durchgeführt wird durch Empfangen einer Strahlung (N1, N2), deren Intensität bei einer bekannten Frequenz (F1, F2) zeitlich moduliert wird, von dem Objekt (E1, E2) durch die Sensoren (D1, D2) in dem Gesichtsfeld (FOV), wobei das Ausgangssignal für die Winkellage des Objektes (E) repräsentativ ist und unter Verwendung der bekannten Frequenz (F1, F2) berechnet wird,
   wobei jedem Objekt (E1, E2) eine spezifische Strahlung (N1, N2) zugeordnet ist, die ihre eigene eindeutige Modulationsfrequenz (F1, F2) aufweist.

2. Verfahren nach Anspruch 1, außerdem den Schritt des Bestrahlens jedes der Objekte (E1, E2) mit einer Strahlung (M) derart, dass der Empfang der Strahlung (N) durch Reflexion von dem Objekt (E) in das Gesichtsfeld (FOV) für jedes der Objekte (E1, E2) auftritt.

3. Verfahren nach Anspruch 1, außerdem den Schritt des Bestrahlens der Objekte (E1, E2) mit einer Mehrzahl von Strahlungen (M1, M2, M3) umfassend, die dieselbe Wellenlänge aufweisen und so synchronisiert sind, dass der Empfang der Strahlung (N) durch Reflexionen von dem Objekt (E) in das Gesichtsfeld (FOV) für jedes der Objekte (E1, E2) erfolgt.

4. Verfahren nach Anspruch 1, bei dem jedes Objekt (E1, E2) eine Strahlungsquelle ist, die die jeweilige spezifische Strahlung (N1, N2) emittiert.

5. Verfahren nach irgendeinem der Ansprüche 1 bis 4, bei dem das Ausgangssignal (A) das Differenz-zu-Summe-Verhältnis der Amplituden der temporär gefilterten Signale ist, die von dem ersten und zweiten Sensor (D1, D2) geliefert werden.

6. Verfahren nach irgendeinem der Ansprüche 1 bis 4, bei dem das Ausgangssignal (A) proportional zu der Differenz zwischen dem Logarithmus des Absolutwertes des temporär gefilterten Signals, das von dem ersten Sensor (D1) geliefert wird, und dem Logarithmus des Absolutwertes des temporär gefilterten Signals, das von dem zweiten Sensor (D2) geliefert wird, ist.

7. Verfahren nach irgendeinem der Ansprüche 1 bis 6, außerdem einen Schritt des Demodulierens der Signale (Ph1, Ph2) umfassend, die von dem ersten und zweiten Sensor (D1, D2) vor dem Schritt des Berechnens des Ausgangssignals (A) geliefert werden, wobei das Ausgangssignal (A) ausgehend von den demodulierten Signalen berechnet wird.

8. Verfahren nach Anspruch 7, bei dem die Demodulation eine asynchrone Demodulation, eine synchrone Demodulation oder eine Detektion der Hüllkurve der Signale (Ph1, Ph2) ist, die von dem ersten und zweiten Sensor (D1, D2) geliefert werden.

9. Verfahren nach Anspruch 7 oder 8, bei dem die Demodulation einen Schritt des Filterns der Signale (Ph1, Ph2) enthält, die von dem ersten und zweiten Sensor (D1, D2) geliefert werden, wobei das Filtern ein selektives Filtern, das auf die bekannte Modulationsfrequenz (F) zentriert ist, ein derivatives Filtern oder eine Kombination sowohl eines selektiven Filterns auf die bekannte Modulationsfrequenz (F) als auch eines derivativen Filterns ist.

10. Verfahren nach irgendeinem der Ansprüche 1 bis 9, bei dem die Sensoren (D1, D2) optische Sensoren, wie photoelektrische Sensoren sind und die Strahlung (M) eine optische Strahlung, wie eine Infrarotstrahlung ist.

11. Vorrichtung (12) zum Messen der relativen Winkellage jedes Objektes einer Mehrzahl von Objekten (E1, E2) und der Vorrichtung, wobei die Vorrichtung umfasst:

   - mindestens einen ersten und einen zweiten Sensor (D1, D2), die jeweils ein erstes und ein zweites Empfangsfeld begrenzen, wobei das erste und das zweite Empfangsfeld in einem Bereich überlappen, der als das Gesichtsfeld (FOV) der Vorrichtung (12) definiert ist,
   - eine Mehrzahl von Strahlungsquellen (301, 302), wobei jede der Strahlungsquellen angepasst ist, eine Strahlung (M1, M2), deren Intensität bei einer bekannten Frequenz (F1, F2) zeitlich moduliert ist, zu einem der Objekte zu emittieren, derart dass die Strahlung von dem Objekt in das Gesichtsfeld reflektiert wird, wobei jede Strahlung (M1, M2) ihre eigene eindeutige Modulationsfrequenz (F1, F2) aufweist; und
   - einen Detektionskreis (20), der ein Mittel (24) zum Berechnen eines Ausgangssignals (A, B) für jedes der Objekte ausgehend von den Signalen (Ph1, Ph2) umfasst, die von dem ersten und dem zweiten Sensor (D1, D2) geliefert werden, wobei das Ausgangssignal für die Winkellage des jeweiligen Objekts (G) repräsentativ ist und unter Verwendung der jeweiligen bekannten eindeutigen Frequenz (F1, F2) berechnet wird.

12. Vorrichtung nach Anspruch 11, bei der die Sensoren (D1, D2) optische Sensoren, wie photoelektrische Sensoren sind und jede der Strahlungsquellen (301, 302) eine optische Strahlungsquelle, wie eine Infrarotquelle ist.

13. Vorrichtung nach Anspruch 11 oder 12, außerdem eine Linse (L) mit einem Linsenzentrum (O) umfassend, wobei der erste und zweite Sensor (D1, D2) im Wesentlichen in der Bildebene der Linse (L) angeordnet sind und die mittleren Beobachtungsrichtungen des ersten und zweiten Sensors (D1, D2) im Wesentlichen den zwei Linien entsprechen, die die Mitten des ersten und zweiten Sensors und das Linsenzentrum (O) der Linse (L) verbinden.

14. Vorrichtung nach irgendeinem der Ansprüche 11 bis 13, bei der der Detektionskreis (20) einen Demodulator (26) zum Demodulieren der Signale (Ph1, Ph2) umfasst, die von dem ersten und zweiten Sensor (D1, D2) geliefert werden.

15. Verfahren nach irgendeinem der Ansprüche 1 bis 10 oder Vorrichtung nach irgendeinem der Ansprüche 11 bis 14, bei denen jeder Sensor (D1, D2) eine Winkelempfindlichkeitsfunktion mit einer räumlichen Form aufweist, die durch eine räumliche Gaussform angenähert werden kann, die durch eine Varianz ($\sigma^2$) charakterisiert ist, wobei die Form durch einen Winkel bei halber Breite ($\Delta\varrho$) proportional zur Quadratwurzel der Varianz ($\sigma^2$) der Gaussform charakterisiert ist.

16. Gruppe von Vorrichtungen, die mindestens eine Linse, mindestens drei Sensoren und eine Mehrzahl von Detektionskreisen umfassen, wobei jedes Paar von zwei aufeinanderfolgenden Sensoren nahe der Brennpunktebene einer der mindestens einen Linse angeordnet ist und mit einem der Mehrzahl von Detektionskreisen verbunden ist, wobei mindestens eine der Vorrichtungen eine Vorrichtung entsprechend irgendeinem der Ansprüche 11 bis 14 ist und mindestens eine Linse einschließt und bei der jede Linse der mindestens einen Linse und jeder Sensor im Wesentlichen auf einer sphärischen, zylindrischen oder gekrümmten Fläche angeordnet ist, die mindestens ein lokales gemeinsames Zentrum umgibt, wobei das mindestens eine lokale gemeinsame Zentrum das Zentrum des Gesichtsfeldes (FOVt) darstellt, das die Summe über alle Gesichtsfelder (FOVi) jeder der zusammengenommenen Vorrichtungen ist.

## Revendications

1. Procédé pour mesurer la position angulaire relative de chacun d'une pluralité d'objets (E1, E2) et d'un dispositif de mesure de position angulaire (12) comprenant au moins des premier et deuxième transducteurs (D1, D2) délimitant respectivement des premier et deuxième champs de réception, les premier et deuxième champs de réception se superposant dans une zone définie en tant que champ de vision (FOV) du dispositif (12),
le procédé comprenant les étapes suivantes, pour chacun (E1, E2) de la pluralité d'objets :

a) d'exécution d'une modulation d'amplitude des signaux (Ph1, Ph2) délivrés par les premier et deuxième transducteurs (D1, D2) ; et
b) de calcul d'un signal de sortie (A, B) à partir des signaux modulés en amplitude (Ph1, Ph2) délivrés par les premier et deuxième transducteurs (D1, D2),

l'étape a) étant effectuée en recevant un rayonnement (N1, N2), dont l'intensité est modulée dans le temps à une fréquence connue (F1, F2), dudit objet (E1, E2) par lesdits transducteurs (D1, D2) dans le champ de vision (FOV), le signal de sortie étant représentatif de la position angulaire de l'objet (E) et étant calculé en utilisant la fréquence connue (F1, F2),
chaque objet (E1, E2) étant associé à un rayonnement (N1, N2) spécifique ayant sa propre fréquence de modulation (F1, F2) unique.

2. Procédé selon la revendication 1, comprenant en outre l'étape d'illumination de chacun desdits objets (E1, E2) avec un rayonnement (M) de sorte que ladite réception dudit rayonnement (N) ait lieu par une réflexion à partir dudit objet (E) dans ledit champ de vision (FOV) pour chacun desdits objets (E1, E2).

3. Procédé selon la revendication 1, comprenant en outre l'étape d'illumination desdits objets (E1, E2) avec une pluralité de rayonnements (M1, M2, M3) ayant la même longueur d'onde et synchronisés de sorte que ladite réception dudit rayonnement (N) ait lieu par une réflexion à partir dudit objet (E) dans ledit champ de vision (FOV) pour chacun desdits objets (E1, E2).

4. Procédé selon la revendication 1, dans lequel chaque objet (E1, E2) est une source de rayonnement émettant le rayonnement (N1, N2) spécifique respectif.

5. Procédé selon l'une quelconque des revendications 1 à 4, dans lequel le signal de sortie (A) est le rapport différence sur somme des amplitudes des signaux filtrés temporellement délivrés par les premier et deuxième transducteurs (D1, D2).

6. Procédé selon l'une quelconque des revendications 1 à 4, dans lequel le signal de sortie (A) est proportionnel à la différence entre le logarithme de la valeur absolue du signal filtré temporellement délivré par le premier transducteur (D1) et le logarithme de la valeur absolue du signal filtré temporellement délivré par le deuxième transducteur (D2).

7. Procédé selon l'une quelconque des revendications 1 à 6, comprenant en outre une étape de démodulation des signaux (Ph1, Ph2) délivrés par les premier et deuxième transducteurs (D1, D2) avant l'étape de calcul du signal de sortie (A), le signal de sortie (A) étant calculé à partir des signaux démodulés.

8. Procédé selon la revendication 7, dans lequel la démodulation est une démodulation asynchrone, une démodulation synchrone ou une détection d'enveloppe des signaux (Ph1, Ph2) délivrés par les premier et deuxième transducteurs (D1, D2).

9. Procédé selon la revendication 7 ou 8, dans lequel la démodulation implique une étape de filtrage des signaux (Ph1, Ph2) délivrés par les premier et deuxième transducteurs (D1, D2), ledit filtrage étant un filtrage sélectif centré sur ladite fréquence de modulation connue (F), un filtrage par dérivation, ou une combinaison d'un filtrage sélectif sur ladite fréquence de modulation connue (F) et d'un filtrage par dérivation.

10. Procédé selon l'une quelconque des revendications 1 à 9, dans lequel lesdits transducteurs (D1, D2) sont des capteurs optiques, tels que des capteurs photoélectriques, et ledit rayonnement (M) est un rayonnement optique, tel qu'un rayonnement infrarouge.

11. Dispositif (12) pour mesurer la position angulaire relative de chacun d'une pluralité d'objets (E1, E2) et dudit dispositif, le dispositif comprenant :

> - au moins des premier et deuxième transducteurs (D1, D2) délimitant respectivement des premier et deuxième champs de réception, les premier et deuxième champs de réception se superposant dans une zone définie en tant que champ de vision (FOV) du dispositif (10) ;
> - une pluralité de sources de rayonnement (301, 302), chacune desdites sources de rayonnement étant conçue pour émettre un rayonnement (M1, M2), dont l'intensité est modulée dans le temps à une fréquence connue (F1, F2), vers l'un desdits objets, de sorte que ledit rayonnement soit réfléchi à partir dudit objet dans ledit champ de vision, chaque rayonnement (M1, M2) ayant sa propre fréquence de modulation (F1, F2) unique ; et
> - un circuit de détection (20) comprenant des moyens (24) pour calculer, pour chacun desdits objets, un signal de sortie (A, B) à partir des signaux (Ph1, Ph2) délivrés par les premier et deuxième transducteurs (D1, D2), le signal de sortie étant représentatif de la position angulaire de l'objet (E) respectif et étant calculé en utilisant la fréquence unique connue (F1, F2) respective.

12. Dispositif selon la revendication 11, dans lequel lesdits transducteurs (D1, D2) sont des capteurs optiques, tels que des capteurs photoélectriques, et chacune desdites sources de rayonnement (301, 302) est une source de rayonnement optique, telle qu'une source infrarouge.

13. Dispositif selon la revendication 11 ou 12, comprenant en outre une lentille (L) ayant un centre de lentille (O), les premier et deuxième transducteurs (D1, D2) étant placés sensiblement dans le plan focal image de la lentille (L) et les directions moyennes d'observation des premier et deuxième transducteurs (D1, D2) correspondant sensiblement à deux droites reliant les centres des premier et deuxième transducteurs et le centre de lentille (O) de la lentille (L).

14. Dispositif selon l'une quelconque des revendications 11 à 13, dans lequel le circuit de détection (20) comprend un démodulateur (26) pour démoduler les signaux (Ph1, Ph2) délivrés par les premier et deuxième transducteurs (D1, D2).

15. Procédé selon l'une quelconque des revendications 1 à 10 ou dispositif selon l'une quelconque des revendications 11 à 14, dans lequel chaque transducteur (D1, D2) a une fonction de sensibilité angulaire avec une forme spatiale qui peut être approchée par une forme gaussienne spatiale **caractérisée par** une variance ($\sigma^2$), la forme étant **caractérisée par** un angle à mi-largeur ($\Delta\rho$) proportionnel à la racine carrée de la variance ($\sigma^2$) de la forme gaussienne.

16. Ensemble de dispositifs comprenant au moins une lentille, au moins trois transducteurs et une pluralité de circuits de détection, chaque paire de deux transducteurs consécutifs étant placée à proximité du plan focal de l'une de ladite au moins une lentille et reliée à l'un de la pluralité de circuits de détection, dans lequel au moins l'un des dispositifs est un dispositif selon l'une quelconque des revendications 11 à 14 et comprend l'une de ladite au moins une lentille, et dans lequel chaque lentille de ladite au moins une lentille et chaque transducteur sont agencés sensiblement sur une surface sphérique, cylindrique ou incurvée entourant au moins un centre commun local, ledit au moins un centre commun local constituant le centre du champ de vision (FOVt) qui est la somme sur tous les champs de vision (FOVi) de chacun des dispositifs pris les uns avec les autres.

**FIG.1**

FIG.2

FIG.3

## FIG.4

## FIG.5

## FIG.6

**EP 2 664 890 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2341312 A1
- US 5216486 A
- US 6031612 A